# EUROPÄISCHE PATENTSCHRIFT

(11) **EP 1 378 396 B1**
(45) Veröffentlichungstag und Bekanntmachung des Hinweises auf die Patenterteilung: **17.09.2008**
(21) Anmeldenummer: 03008214.3
(22) Anmeldetag: 09.04.2003
(51) Int. Cl.: B60Q 1/12, B60Q 1/14, B60R 1/00

(54) **Anordnung zur Sichtverbesserung**
Device for increasing visibility
Dispositif améliorant la visibilité

(30) Priorität: 05.07.2002 DE 10230202
(43) Veröffentlichungstag der Anmeldung: 07.01.2004
(73) Patentinhaber: ROBERT BOSCH GMBH, 70442 Stuttgart (DE)
(72) Erfinder: Eschler, Johannes, 71254 Ditzingen (DE); Fiess, Reinhold, 77770 Durbach (DE)

(56) Entgegenhaltungen:
- WO-A-02/36389
- DE-A1- 4 032 927
- US-A- 5 414 439
- US-A- 6 067 110

## Beschreibung

### Stand der Technik

Die Erfindung betrifft eine Anordnung zur Sichtverbesserung für ein Kraftfahrzeug mit einem Infrarotscheinwerfer und einem Bildsensor.

Aus DE 40 32 927 C2 ist es bekannt, den Raum vor einem Fahrzeug zur Unterstützung der Sicht im Dunklen mit Infrarot-Strahlung auszuleuchten und den damit ausgeleuchteten Bereich mit einer Kamera zu erfassen. Dabei wird der nahe Infrarotbereich ausgenutzt, weil dafür geeignete Bildsensoren zur Verfügung stehen. Im Sinne einer ausreichenden Bestrahlungsstärke im Infrarotbereich, welche auch das Erkennen weit entfernter Objekte ermöglicht, ist man dabei bestrebt, Infrarotscheinwerfer mit einem möglichst kleinen Abstrahlwinkel einzusetzen.

US 60 67 110 beschreibt eine Anordnung nach dem Oberbegriff des Anspruchs 1.

### Vorteile der Erfindung

Mit der Erfindung werden verschiedene Vorteile dadurch erzielt, dass der Infrarotscheinwerfer einen Abstrahlwinkel aufweist, der mindestens in horizontaler Richtung kleiner als der Sichtwinkel des Bildsensors ist, dass mindestens ein Sensor zur Erzeugung eines Steuersignals in Abhängigkeit davon, in welcher Richtung sich das Kraftfahrzeug bewegen wird, vorgesehen ist, und dass die Abstrahlrichtung des Infrarotsensors und die Position eines ausgewählten Bildbereichs innerhalb eines vom Bildsensor aufgenommenen Bildes in Abhängigkeit von dem Steuersignal steuerbar sind.

Ein Vorteil der erfindungsgemäßen Anordnung besteht darin, dass trotz der relativ starken Bündelung der Infrarotstrahlung eine Bestrahlung der zur Erhöhung der Sicherheit erforderlichen Bereiche erfolgt. Dies ist insbesondere bei einem kurvigen Straßenverlauf vorteilhaft. Dabei ist es nicht erforderlich, den Bildsensor durch einen aufwendigen Antrieb schwenkbar anzuordnen. Bei einer zusätzlichen Verwendung des Bildsensors für andere Aufgaben, wie beispielsweise adaptive Fahrkontrolle (adaptive cruise control) einschließlich einer Steuerung von stop and go, Spurerkennung, Objektdetektion, Verkehrszeichenerkennung und automatische Notbremse, kann der gleiche festmontierte Sensor mit einem relativ großen Sichtwinkel benutzt werden.

Bei der erfindungsgemäßen Anordnung kann eine Bildwiedergabevorrichtung zur Sichtbarmachung des ausgewählten Bildbereichs vorgesehen sein, damit der Fahrzeugführer unmittelbar von den Informationen im ausgewählten Bildbereich Gebrauch machen kann.

Durch eine Bewegung des Infrarotscheinwerfers in horizontaler Richtung wird die Beleuchtung an den horizontalen Verlauf der Straße - also an Kurven - angepasst. Eine Bewegung in vertikaler Richtung dient zur Anpassung an den Höhenverlauf der Straße. Je nach Erfordernissen im Einzelnen kann gemäß einer vorteilhaften Ausgestaltung vorgesehen sein, dass der Bildsensor ein breiteres und/oder höheres Bildformat als die Bildwiedergabevorrichtung aufweist.

Die Erfindung ist ebenfalls nicht auf die direkte Sichtverbesserung mit Hilfe einer Bildwiedergabeeinrichtung beschränkt. Es kann alternativ oder zusätzlich vorgesehen sein, dass die den ausgewählten Bildbereich darstellenden Signale einer Bildverarbeitungseinrichtung zuführbar sind.

Zur Gewinnung des Steuersignals bestehen verschiedene Möglichkeiten. Insbesondere kann bei einer diesbezüglichen Ausgestaltung vorgesehen sein, dass der mindestens eine Sensor das Steuersignal aus dem Lenkeinschlag und der Geschwindigkeit des Fahrzeugs ermittelt.

Bei Vorhandensein eines Drehratensensors, der gegebenenfalls auch anderen Zwecken dient, kann das Steuersignal dadurch erzeugt werden, dass der mindestens eine Sensor die Geschwindigkeit der Drehrate des Fahrzeugs um die senkrechte Achse zur Bildung des Steuersignals auswertet.

Ferner kann bei entsprechenden Voraussetzungen vorgesehen sein, dass mit Hilfe eines Navigationssystems der voraussichtliche Weg des Fahrzeugs ermittelt und daraus das Steuersignal bestimmt wird.

### Zeichnung

Ein Ausführungsbeispiel der Erfindung ist in der Zeichnung anhand mehrerer Figuren dargestellt und in der nachfolgenden Beschreibung näher erläutert. Es zeigt:
- Fig. 1: ein Blockschaltbild einer erfindungsgemäßen Anordnung,
- Fig. 2: schematisch ein aufgenommenes und ein wiedergegebenes Infrarotbild bei Geradeausfahrt und
- Fig. 3: bei Durchfahren einer Rechtskurve.

### Beschreibung des Ausführungsbeispiels

In einem Fahrzeugdatensensor 1 werden je nach Ausführungen im Einzelnen Daten der Fahrzeugbewegung gewonnen. Diese werden einer Steuereinrichtung 2 zugeführt, die ein Steuersignal S erzeugt, welches die zukünftige Fahrtrichtung des Fahrzeugs angibt.

Das Steuersignal S wird einer Einrichtung 3 zur Steuerung des Infrarotscheinwerfers 4 und einem Steuergerät 7 einer Kamera (Bildsensor) 8 zugeleitet. Der schematisch dargestellte Infrarotscheinwerfer 4 ist schwenkbar gelagert und wird von der Einrichtung 3 gesteuert und mit Hilfe eines nicht dargestellten Antriebs geschwenkt. Der Abstrahlwinkel 5 des Infrarotscheinwerfers 4 ist beispielsweise ±15°, wobei die Infrarot-Strahlung nicht scharf begrenzt ist.

Die Kamera 8 hat einen größeren Sichtwinkel 9 von beispielsweise horizontal ±20° bis ±30°. Das Bildformat bei derartigen für die Sichtverbesserung von Fahrzeugen vorgesehenen Kameras beträgt insbesondere 3:1. Als Sensor kommt ein CCD- oder CMOS-Sensor in Frage. Mit Hilfe des Steuersignals S wird von dem gesamten aufgenommenen Bild lediglich ein ausgewählter Bildbereich (region of interest) an die Bildwiedergabevorrichtung 10 übertragen.

Ein Bediengerät 6 ermöglicht die Einstellung verschiedener Größen bei der erfindungsgemäßen Anordnung, beispielsweise die Helligkeit der Bildwiedergabe oder eine Auswahl verschiedener Wiedergabearten sowie das Ein- und Ausschalten.

Die Bildwiedergabevorrichtung 10 kann beispielsweise bei Flüssigkristall-Displays in einem Kombi-Instrument oder auf der Mittelkonsole oder als sogenanntes Head-up-Display ausgeführt sein.

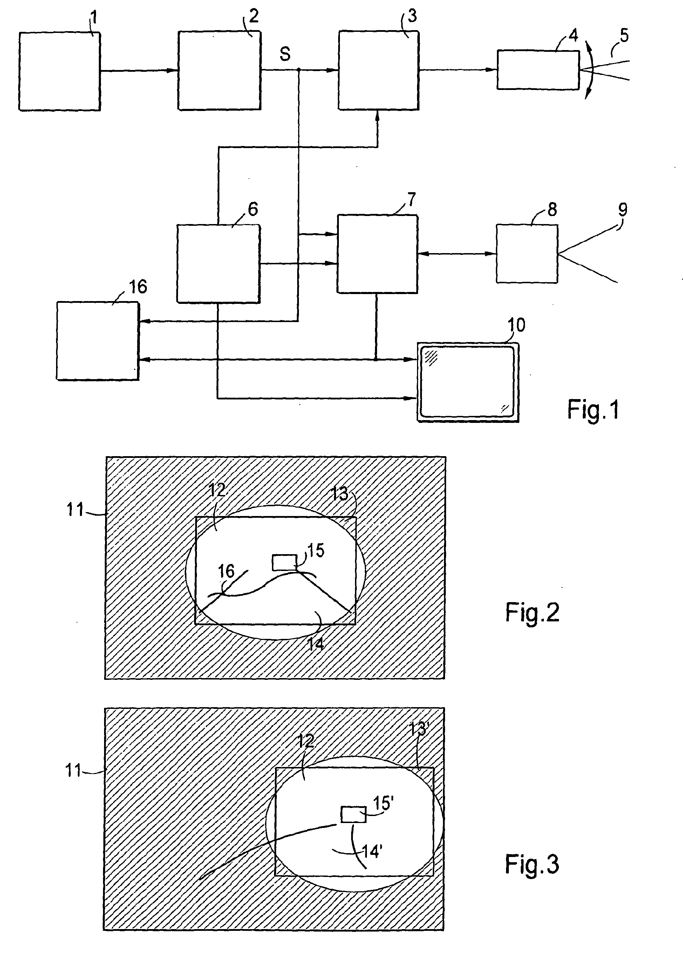

In den Figuren 2 und 3 stellt das breite Rechteck das von der Kamera 8 aufgenommene Bild dar. Lediglich ein ausgewählter Bildbereich 13 wird auf dem Display 10 dargestellt. Dabei wird die Szene, die im nicht schraffierten Bildbereich 12 wiedergegeben wird, von dem Infrarotscheinwerfer 4 bestrahlt. In Fig. 2 ist ferner eine gerade verlaufende Straße 14 mit einem Hindernis 15 angedeutet, wobei 16 die (auf dem Display nicht sichtbare) Grenze des Abblendlichtes zeigt.

Fährt das Fahrzeug beispielsweise in einer Rechtskurve, so wird ein Bildbereich 13' (Fig. 3) zur Darstellung auf dem Display 10 ausgewählt. In entsprechender Weise wird der Infrarotscheinwerfer 4 (Fig. 1) geschwenkt, so dass nunmehr sowohl der bestrahlte Bereich 12 als auch der wiedergegebene Bildbereich 13' die in einer Kurve verlaufende Straße 14' mit dem Hindernis 15' erfasst. In entsprechender Weise können die Richtung des Infrarotscheinwerfers 4 und die Lage des ausgewählten und wiedergegebenen Bildbereichs 13, 13' vertikal geändert werden, um die Sicht an Kuppen oder Mulden zu verbessern.

Alternativ oder zusätzlich zum Display 10 kann an das Steuergerät 7 eine Bildverarbeitungseinrichtung 16 angeschlossen sein, deren Sicht durch die erfindungsgemäße Anordnung ebenfalls verbessert wird. Der Bildverarbeitungseinrichtung 16 werden dazu die den ausgewählten Bildbereich darstellenden Signale und das Steuersignal S zugeführt. Wie mit bekannten Bildverarbeitungseinrichtungen können aus dem aufgenommenen Bild bzw. aus dem ausgewählten Bildbereich Informationen gewonnen werden, beispielsweise zur Abstandswarnung oder zur Lenkung des Kraftfahrzeugs.

## Patentansprüche

1. Anordnung zur Sichtverbesserung für ein Kraftfahrzeug mit einem Infrarotscheinwerfer (4) und einem Bildsensor (8),
**dadurch gekennzeichnet, dass** der Infrarotscheinwerfer (4) einen Abstrahlwinkel (5) aufweist, der mindestens in horizontaler Richtung kleiner als der Sichtwinkel (9) des Bildsensors (8) ist, dass mindestens ein Sensor (1) zur Erzeugung eines Steuersignals in Abhängigkeit davon, in welcher Richtung sich das Kraftfahrzeug bewegen wird, vorgesehen ist, und dass die Abstrahlrichtung des Infrarotsensors (4) und die Position eines ausgewählten Bildbereichs (13, 13') innerhalb eines vom Bildsensor (8) aufgenommenen Bildes (11) in Abhängigkeit von dem Steuersignal steuerbar sind.

2. Anordnung nach Anspruch 1, **dadurch gekennzeichnet, dass** eine Bildwiedergabevorrichtung (10) zur Sichtbarmachung des ausgewählten Bildbereichs (13, 13') vorgesehen ist.

3. Anordnung nach Anspruch 2, **dadurch gekennzeichnet, dass** der Bildsensor (8) ein breiteres und/oder höheres Bildformat als die Bildwiedergabevorrichtung (10) aufweist.

4. Anordnung nach einem der vorhergehenden Ansprüche,
**dadurch gekennzeichnet, dass** die den ausgewählten Bildbereich (13, 13') darstellenden Signale einer Bildverarbeitungseinrichtung (16) zuführbar sind.

5. Anordnung nach einem der vorhergehenden Ansprüche,
**dadurch gekennzeichnet, dass** der mindestens eine Sensor (1) das Steuersignal aus dem Lenkeinschlag und der Geschwindigkeit des Fahrzeugs ermittelt.

6. Anordnung nach einem der Ansprüche 1 bis 4, **dadurch gekennzeichnet, dass** der mindestens eine Sensor (1) die Geschwindigkeit der Drehung des Fahrzeugs um die senkrechte Achse zur Bildung des Steuersignals auswertet.

7. Anordnung nach einem der Ansprüche 1 bis 4, **dadurch gekennzeichnet, dass** mit Hilfe eines Navigationssystems (1) der voraussichtliche Weg des Fahrzeugs ermittelt und daraus das Steuersignal bestimmt wird.

## Claims

1. Arrangement for increasing visibility for a motor vehicle, with an infrared headlight (4) and an image sensor (8), **characterized in that** the infrared headlight (4) has an emission angle (5) which is smaller than the viewing angle (9) of the image sensor (8) at least in the horizontal direction, **in that** at least one sensor (1) is provided for producing a control signal as a function of the direction in which the motor vehicle is moved, and **in that** the emission direction of the infrared headlight (4) and the position of a selected image region (13, 13') within an image (11) recorded by the image sensor (8) can be controlled as a function of the control signal.

2. Arrangement according to Claim 1, **characterized in that** an image display apparatus (10) for making the selected image region (13, 13') visible is provided.

3. Arrangement according to Claim 2, **characterized in that** the image sensor (8) has a wider and/or higher image format than the image display apparatus (10).

4. Arrangement according to one of the preceding claims, **characterized in that** the signals representing the selected image region (13, 13') can be fed to an image processing device (16).

5. Arrangement according to one of the preceding claims, **characterized in that** the at least one sensor (1) determines the control signal from the steering wheel angle and from the speed of the vehicle.

6. Arrangement according to one of Claims 1 to 4, **characterized in that** the at least one sensor (1) evaluates the speed of the rotation of the vehicle about the perpendicular axis for forming the control signal.

7. Arrangement according to one of Claims 1 to 4, **characterized in that,** with the aid of a navigation system (1), the anticipated path of the vehicle is determined and the control signal is determined therefrom.

## Revendications

1. Dispositif améliorant la visibilité d'un véhicule automobile comportant un projecteur infrarouge (4) et un capteur d'image (8),
**caractérisé en ce que**
le projecteur infrarouge (4) a un angle d'émission (5) plus petit dans la direction horizontale que l'angle de vision (9) du capteur d'image (8),
au moins un capteur (1) est prévu pour générer un signal de commande en fonction de la direction dans laquelle se déplace le véhicule automobile, et
la direction d'émission du capteur infrarouge (4) et la position d'une plage d'image (13, 13') sélectionnée se commande à l'intérieur d'une image (11) prise par le capteur d'image (8) en fonction du signal de commande.

2. Dispositif selon la revendication 1,
**caractérisé par**
un dispositif de reproduction d'image (10) pour rendre visible la plage d'image sélectionnée (13, 13').

3. Dispositif selon la revendication 2,
**caractérisé en ce que**
le capteur d'image (8) a un format d'image plus large et/ou plus haut que le dispositif de reproduction d'image (10).

4. Dispositif selon les revendications précédentes,
**caractérisé en ce que**
les signaux représentant la plage d'image sélectionnée (13, 13') sont appliqués à une installation de traitement d'image (16).

5. Dispositif selon les revendications précédentes,
**caractérisé en ce qu'**
au moins un capteur (1) détermine le signal de commande à partir de l'angle de braquage et de la vitesse du véhicule.

6. Dispositif selon les revendications 1 à 4,
**caractérisé en ce qu'**
au moins un capteur (1) exploite la vitesse de rotation du véhicule autour de l'axe vertical pour former le signal de commande.

7. Dispositif selon les revendications 1 à 4,
**caractérisé en ce qu'**
à l'aide d'un système de navigation (1), on détermine la trajectoire prévisible du véhicule et on en déduit le signal de commande.
